# EUROPÄISCHE PATENTSCHRIFT

(11) **EP 0 542 085 B1**
(45) Veröffentlichungstag und Bekanntmachung des Hinweises auf die Patenterteilung: **24.01.1996**
(21) Anmeldenummer: 92118742.3
(22) Anmeldetag: 02.11.1992
(51) Int. Cl.: C08G 18/40, C08G 18/62, C08G 18/72, C08G 18/08, C09D 175/04

(54) **Verwendung von Polyetherpolyolen als Zusatzmittel für wässrige Polyurethanlacke**
Use of polyetherpolyols as an additive for aqueous polyurethane lacquers
Utilisation de polyétherpolyols comme additifs pour des peintures aqueuses de polyuréthane

(30) Priorität: 13.11.1991 DE 4137229
(43) Veröffentlichungstag der Anmeldung: 19.05.1993
(73) Patentinhaber: BAYER AG, D-51368 Leverkusen (DE)
(72) Erfinder: Margotte, Dieter, Dr., W-4150 Krefeld (DE); Kubitza, Werner, Dipl.-Ing., W-5090 Leverkusen 3 (DE)

(56) Entgegenhaltungen:
- EP-A- 0 358 979
- FR-A- 1 566 595

## Beschreibung

Die Erfindung betrifft die Verwendung von ausgewählten, wasserlöslichen Polyetherpolyolen als Zusatzmittel in wäßrigen Beschichtungsmitteln, deren Bindemittel aus einer Kombination aus wasserverdünnbaren Polyacrylatharzen und organischen Polyisocyanaten besteht.

In der Oberflächen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Bei chemisch vernetzenden Polyurethanlacken, die aufgrund ihrer hervorragenden Eigenschaften auf dem Beschichtungssektor eine große Bedeutung haben, konnte lange Zeit auf organische Lösemittel nicht verzichtet werden. Die Verwendung von Wasser anstelle von organischen Lösungsmitteln in Zweikomponenten-Polyurethanlacken auf Basis von Polyisocyanaten mit freien Isocyanatgruppen schien lange Zeit kein gangbarer Weg zu sein, da bekannt ist, daß Isocyanatgruppen nicht nur mit alkoholischen Hydroxylgruppen sondern auch mit Wasser reagieren. Außerdem ist natürlich die Konzentration an, vom Wasser herrührenden, aktiven Wasserstoffatomen in derartigen Systemen weit höher als die Konzentration an Hydroxylgruppen der organischen, NCO-reaktiven Komponente, so daß davon ausgegangen werden mußte, daß in dem ternären System/Polyisocyanat/organische Polyhydroxylverbindung/Wasser vor allem eine Isocyanat-Wasser-Reaktion unter Harnstoff-und Kohlendioxidbildung abläuft, die einerseits nicht zur Vernetzung der organischen Polyhydroxylverbindungen und andererseits zur Schäumung des Lackansatzes aufgrund der Kohlendioxidbildung führt.

In der EP-A-0 358 979 werden erstmals wäßrige Zweikomponenten-Bindemittel auf Basis von wasserverdünnbaren Polyacrylatharzen und organischen Polyisocyanaten beschrieben. Die in dieser Vorveröffentlichung beschriebenen Beschichtungsmittel führen nach der Aushärtung zu Filmen, hoher Härte aber mit einem für viele Anwendungen nicht ausreichenden Glanz. Auch ist die Elastizität und die Abriebfestigkeit für eine Reihe von Anwendungen nicht ausreichend. Diese Eigenschaften werden z.B. gefordert in der Holz- und Möbellackierung sowie für Beschichtungen von flexiblen Untergründen wie Kork oder Kunststoff.

Jetzt wurde überraschend gefunden, daß der Zusatz von geringen Mengen an wasserlöslichen Polyetherpolyolen der nachstehend näher beschriebenen Art zu derartigen wäßrigen Beschichtungsmitteln eine deutliche Verbesserung des Glanzes, der Elastizität und der Abriebfestigkeit der aus den Beschichtungsmitteln herstellbaren Beschichtungen führt.

Gegenstand der Erfindung ist daher die Verwendung von wasserlöslichen Polyetherpolyolen des Molekulargewichtsbereichs 300 bis 1000 in Mengen von 0,5 bis 6 Gew.-%, bezogen auf das Gewicht der Komponente a), als Zusatzmittel für wäßrige Beschichtungsmittel, deren Bindemittel aus einer Kombination aus
a) einer in Wasser gelöst oder dispergiert vorliegenden Polyolkomponente, bestehend im wesentlichen aus mindestens einem wasserverdünnbaren, Hydroxylgruppen aufweisenden Polyacrylatharz eines über 500 liegenden Molekulargewichts Mn und
b) einer in der wäßrigen Lösung und/oder Dispersion der Polyolkomponente a) emulgiert vorliegenden Polyisocyanatkomponente einer Viskosität bei 23°C von 50 bis 10 000 mPa.s

besteht, wobei die Mengenverhältnisse der Bindemittelkomponenten und der als Zusatzmittel eingesetzten Polyetherpolyole einem NCO/OH-Äquivalentverhältnis von 0,5:1 bis 5:1 entsprechen.

Bei der in den Beschichtungsmitteln vorliegenden Komponente a) handelt es sich um eine wasserverdünnbare Polyolkomponente, die im wesentlichen aus mindestens einem wasserverdünnbaren Polymerisatharz besteht. Bei diesen Polymerisatharzen handelt es sich um Hydroxylgruppen, Sulfonat- und/oder Carboxylatgruppen, vorzugsweise Carboxylatgruppen und gegebenenfalls Sulfonsäure und/ oder Carboxylgruppen, vorzugsweise Carboxylgruppen aufweisende Polymerisate von olefinisch ungesättigten Monomeren, die vorzugsweise ein nach der Gelpermeationschromatographie bestimmbares Molekulargewicht Mₙ (Zahlenmittel) von 500 bis 50.000, insbesondere 1.000 bis 10.000, eine Hydroxylzahl von 16,5 bis 264, vorzugsweise 33 bis 165 mg KOH/g Festharz, eine Säurezahl (bezogen auf die nicht neutralisierten Sulfonsäure- und/oder Carboxylgruppen) von 0 bis 150, vorzugsweise 0 bis 100 mg KOH/g Festharz und einen Gehalt an Sulfonat- und/oder Carboxylatgruppen von 5 bis 417, vorzugsweise 24 bis 278 Milliäquivalenten pro 100 g Feststoff aufweisen. Besonders bevorzugt handelt es sich bei diesen anionischen Gruppen um Carboxylatgruppen.

Die Polymerisatharze a) kommen bei der Herstellung der erfindungsgemäßen Beschichtungsmittel im allgemeinen in Form von 10- bis 50-, vorzugsweise 20- bis 40-gew.-%igen wäßrigen Lösungen und/oder Dispersionen zum Einsatz, die im allgemeinen eine Viskosität von 10 bis 10⁵, vorzugsweise 100 bis 10.000 mPa.s/23°C und pH-Werte von 5 bis 10, vorzugsweise 6 bis 9 aufweisen.

In Abhängigkeit vom Molekulargewicht der Polymerisate und ihrem Gehalt an anionischen Gruppen bzw. an freien Säuregruppen, insbesondere Carboxylgruppen handelt es sich bei den wäßrigen, die Polymerisate enthaltenden Systemen um echte Dispersionen, kolloiddisperse oder molekulardisperse Dispersionen, im allgemeinen jedoch um sogenannte "Teildispersionen", d.h. um wäßrige Systeme, die zum Teil molekulardispers und zum anderen Teil kolloiddispers sind.

Grundsätzlich kommen die in EP-A-0 358 979 beschriebenen, Hydroxylgruppen aufweisenden Polymerisate in in Wasser gelöster oder dispergierter Form als erfindungsgemäße Komponente a) in Betracht. Bezüglich der Herstellung der Hydroxylgruppen aufweisenden Polymerisate sei daher auf EP-A-0 358 979, Seite 3, Zeile 25 bis Seite 4, Zeile 40 verwiesen.

Nach beendeter Polymerisation werden die Copolymerisate in eine wäßrige Lösung bzw. Dispersion überführt. Hierzu wird die organische Polymerlösung in eine meist vorgewärmte Wasserphase eingeleitet und gleichzeitig das organische Lösemittel destillativ, im allgemeinen unter Anlegen eines Vakuums, entfernt. Um eine gute Wasserlöslichkeit bzw. -dispergierbarkeit zu erreichen, muß der Wasserphase im allgemeinen ein Neutralisationsmittel, wie z.B. anorganische Basen, Ammoniak oder Amine, zugesetzt werden. Als anorganische Basen können beispielsweise Natriumhydroxid, Kaliumhydroxid, als Amine neben Ammoniak Trimethylamin, Triethylamin, Dimethylethanolamin eingesetzt werden. Die Neutralisationsmittel können sowohl im stöchiometrischen Unter- als auch Überschuß eingesetzt werden, wobei die obengenannten Gehalte an Sulfonat- und/oder Carboxylatgruppen, insbesondere an Carboxylatgruppen und die obengenannten Säurezahlen resultieren. Im Falle einer völligen Neutralisation der vorliegenden sauren Gruppen resultiert dann die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalte an Sulfonat- und/oder Carboxylatgruppen der Menge des eingesetzten Neutralisationsmittels. Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann. Die erhaltenen wäßrigen Lösungen bzw. Dispersionen besitzen die obengenannten Konzentrationen und Viskositäten und weisen im allgemeinen einen Gehalt an Restlösungsmittel von unter 5 Gew.-%, vorzugsweise von unter 2 Gew.-% auf. Die praktisch restlose Entfernung auch von höher als Wasser siedenden Lösungsmitteln ist durch azeotrope Destillation möglich.

Selbstverständlich können anstelle der beispielhaft genannten, durch Lösungspolymerisation hergestellten, Hydroxylgruppen aufweisenden Polyacrylatharze auch entsprechende Harze eingesetzt werden, die nach den an sich bekannten Methoden der Emulsionspolymerisation hergestellt worden sind und ansonsten den obengenannten Kriterien entsprechen.

Die in Wasser gelöst oder dispergiert vorliegende Polyolkomponente besteht "im wesentlichen" aus wasserverdünnbaren, Hydroxylgruppen aufweisenden Polyacrylatharzen der genannten Art. Dies bedeutet, daß die Polyolkomponente zumindest zu 51 Gew.-%, vorzugsweise zumindest zu 80 Gew.-% und besonders bevorzugt ausschließlich aus Polyacrylatharzen der genannten Art besteht. Neben diesen Polyacrylatharzen können jedoch auch noch andere wasserverdünnbare Harze als Teil der Polyolkomponente a) zugegen sein. Beispiele hierfür sind die an sich bekannten, gegebenenfalls Urethangruppen aufweisenden, anionisch modifizierten, d.h. Carboxylatgruppen aufweisenden, wasserverdünnbaren Polyesterharze. Selbstverständlich sind die Bestandteile der Polyolkomponente a) von den erfindungswesentlichen Polyetherpolyolen verschieden.

Bei der Polyisocyanatkomponente b) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente b) weist bei 23°C im allgemeinen eine Viskosität von 50 bis 10 000, vorzugsweise 50 bis 1000 mPa.s auf. Besonders bevorzugt handelt es sich bei der Polyisocyanatkomponente b) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polymerisatdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Grundsätzlich handelt es sich bei den Polyisocyanaten b) um jene, wie sie auch gemäß EP-A-0 358 979 zum Einsatz gelangen. Bezüglich der diesbezüglichen Details kann daher auf EP-A-0 358 979, Seite 5, Zeilen 2 bis 55 verwiesen werden.

Bei den erfindungswesentlichen Zusatzmitteln handelt es sich um wasserlösliche Polyetherpolyole eines aus Hydroxylfunktionalität und Hydroxylgruppengehalt errechenbaren Molekulargewichts Mn von 300 bis 1000, vorzugsweise 350 bis 800. Die Polyetherpolyole weisen pro Molekül im allgemeinen 2 bis 4, vorzugsweise 2 bis 3 Hydroxylgruppen auf. Es handelt sich um die aus der Polyurethanchemie an sich bekannten Alkoxylierungsprodukte geeigneter Startermoleküle, wobei zur Alkoxylierungsreaktion insbesondere Ethylenoxid und/oder Propylenoxid, gegebenenfalls im Gemisch und/oder nacheinander zum Einsatz gelangen. Geeignete Startermoleküle sind beispielsweise Wasser, Ethylenglykol, Propylenglykol, die isomeren Butandiole oder Hexandiole, Glycerin, Trimethylolpropan, Pentaerythrit oder beliebige Gemische derartiger Verbindungen.

Zur Herstellung der gebrauchsfertigen Beschichtungsmittel wird die Polyisocyanatkomponente b) in der wäßrigen Dispersion oder Lösung der Polyolkomponente a) emulgiert, wobei die gelöste bzw. dispergierte Polyolkomponente a) gleichzeitig die Funktion eines Emulgators für das zugesetzte Polyisocyanat übernimmt. Dies gilt insbesondere für den bevorzugten Fall der Verwendung von nicht hydrophil modifizierten Polyisocyanaten b). Grundsätzlich möglich, jedoch keineswegs bevorzugt, ist die Verwendung von hydrophil modifizierten Polyisocyanaten als Polyisocyanatkomponente b), die aufgrund der eingebauten ionischen oder nichtionisch-hydrophilen Zentren selbst dispergierbar sind. Die Durchmischung kann durch einfaches Verrühren bei Raumtemperatur erfolgen.

Der Zusatz der erfindungswesentlichen Polyetherpolyole kann zu einem beliebigen Zeitpunkt vor, während und/oder nach der Zugabe der Polyisocyanatkomponente b) zu der wäßrigen Lösung oder Dispersion der Polyolkomponente a) stattfinden. Vorzugsweise wird die erfindungswesentliche Polyetherkomponente der wäßrigen Lösung oder Dispersion der Komponente a) vor der Zugabe der Polyisocyanatkomponente b) durch einfaches Vermischen einverleibt.

Die als Zusatzmittel verwendeten, erfindungswesentlichen Polyetherpolyole werden in Mengen von 0,5 bis 6, vorzugsweise 1 bis 4,5 Gew.-%, bezogen auf das Gewicht der wasserfreien Polyolkomponente a) eingesetzt. Die Menge der Polyisocyanatkomponente b) wird so bemessen, daß das NCO/OH-Äquivalentverhältnis, bezogen auf die Isocyanatgruppen der Komponente b) und die alkoholischen Hydroxylgruppen der Komponente a) und der Polyetherpolyole bei 0,5:1 bis 5:1, vorzugsweise 0,8:1 bis 2:1 liegt.

Vor der Zugabe der Polyisocyanatkomponente b) können der PolymerisatkomponenLe a), d.h. der Dispersion bzw. Lösung der Polymerisate nicht nur die erfindungswesentlichen Zusatzmittel sondern auch sonstige, an sich übliche Hilfs- und Zusatzmittel der Lacktechnologie einverleibt werden. Beispiele für derartige Zusatzmittel sind Entschäumungsmittel, Verlaufhilfsmittel, Pigmente, Dispergierhilfsmittel für die Pigmentverteilung, externe Emulgatoren für die Verbesserung der Wasserverträglichkeit der Bindemittelkomponenten, Verdickungsmittel u.dgl.

Die so erhaltenen Beschichtungsmittel eignen sich für praktisch alle Einsatzgebiete, in denen bislang vor allem lösungsmittelhaltige Beschichtungsmittel mit einem hohen Eigenschaftsprofil Verwendung finden. Beispielhaft genannt seien die industrielle Holz- und Möbellackierung, bei der es insbesondere auf Abriebfestigkeit und hohen Glanz ankommt; die Lackierung und Imprägnierung mineralischer Baustoffoberflächen der unterschiedlichsten Art, wie z.B. Beton, Putz, Faserzementflächen; die Beschichtung von metallischen Substraten der unterschiedlichsten Art wie Aluminium, Stahl; die Kunststofflackierung; sowie die Beschichtung von Holzprodukten wie Papier, Hartfaserplatten u.dgl..

Alle Beschichtungen können wahlweise bei Raumtemperatur oder, falls auf eine beschleunigte Härtung Wert gelegt wird, bei erhöhter Temperatur von bis zu 250°C ausgehärtet werden.

In den nachfolgenden Beispielen beziehen sich alle Prozentangaben auf das Gewicht.

### Beispiele

### Ausgangsmaterialien

### Polyacrylatdispersionen I, II und III

Es handelt sich um 30 %ige wäßrige Emulsionen von mit Ammoniak neutralisierten Copolymerisaten der in nachstehender Tabelle zusammengefaßten Monomeren. Die Herstellung der Dispersionen erfolgte entsprechend der Herstellungsvorschrift der EP-A-0 358 979.

| Polyacrylatdispersion | I | II | III |
|---|---|---|---|
| Methacrylsäuremethylester (g) | 266 | 116 | 381 |
| Styrol (g) | 266 | 116 | - |
| Acrylsäure n-Butylester (g) | 300 | 600 | 450 |
| Acrylsäure (g) | 150 | 150 | 150 |
| Methacrylsäure-2-hydroxyethylester (g) | 459 | 459 | 459 |
| Hydroxylgruppengehalt bezogen auf Festharz (%) | 4 | 4 | 4 |
| Carboxylatgruppengehalt [Milliäquivalente pro 100 g Festharz] | 139 | 139 | 139 |

### Polyisocyanat I

Gemisch aus (i) 70 Gew.-Teilen eines Uretdiongruppen aufweisenden Polyisocyanats, bestehend im wesentlichen aus dimerisiertem Hexamethylendiisocyanat neben untergeordneten Mengen an dessen höheren Homologen und (ii) 30 Gew.-% eines Isocyanuratgruppen aufweisenden Polyisocyanats, bestehend im wesentlichen aus N,N',N"-Tris-(6-isocyanatohexyl)-isocyanurat und untergeordneten Mengen an dessen höheren Homologen.
- Viskosität (23°C):: 200 mPa.s
- NCO-Gehalt:: 22,5 %

### Polyisocyanat II

N,N',N"-Tris-(6-isocyanatohexyl)-biuret im Gemisch mit untergeordneten Mengen seiner höheren Homologen.
- Viskosität (23°C):: 3000 mPa.s
- NCO-Gehalt:: 22,5 %

### Polyetherpolyol I

Polyetherpolyol des Molekulargewichte Mn 560, hergestellt durch Propoxylierung von Trimethylolpropan.

### Polyetherpolyol II

Polyetherpolyol des Molekulargewichte Mn 700, hergestellt durch Ethoxylierung von Trimethylolpropan.

### Polyetherpolyol III

Polyetherpolyol des Molekulargewichts Mn 530, hergestellt durch Propoxylierung von Glycerin.

### Beispiel 1 (Vergleichsbeispie1)

330 Gew.-Teile der Polyacrylatdispersion I werden mit 0,5 Gew.-Teilen einer 25 gew.-%igen Lösung eines handelsüblichen Emulgators (Emulgator WN, Bayer AG, Leverkusen) und 2 Gew.-Teilen einer 20 %igen wäßrigen Lösung eines handelsüblichen nichtionischen Polyurethan-Verdickers (®Acrysol AM 8, Rohm und Haas, Frankfurt) und 0,6 Gew.-Teilen eines handelsüblichen Entschäumers (®Byk 023, Byk Wesel) und 10 Gew.-Teilen Wasser vermischt. Diese Mischung ist praktisch unbegrenzt haltbar. Zu 100 Gew.-Teilen dieser Emulsion werden nun 20 Gew.- Teile des Polyisocyanats I zugegeben und innig vermischt (entsprechend einem NCO/OH-Äquivalentverhältnis, bezogen auf die alkoholischen Hydroxylgruppen von 1,5:1). Ein in einer Schichtstärke von 210 µm naß auf einem Prüfblech aufgetragener Film hat eine Trockenzeit von ca. 3 Stunden. Die gemessenen Eigenschaften sind in Tabelle 1 zusammengestellt.

### Beispiel 2

330 Gew.-Teile der Polyacrylatdispersion I aus Beispiel 1 werden mit 2 Gew.-Teilen des Polyethers I vermischt. Dieses Gemisch wird dann wie in Beispiel 1 mit den dort beschriebenen Hilfsmitteln versetzt. Dann werden 20 Gew.-Teile des Polyisocyanats I eingerührt. Der Lackaufzug erfolgt wie in Beispiel 1 beschrieben. Die Eigenschaften sind in Tabelle 1 zusammengestellt.

### Beispiel 3

330 Gew.-Teile der Polyacrylatdispersion II werden mit 4 Gew.-Teilen des Polyetherpolyole I vermischt. Nach der lacktechnischen Zubereitung entsprechend Beispiel 1 werden 20 Gew.-Teile des Polyisocyanats I zugegeben. Die entsprechend Beispiel 1 erhaltenen Lackfilme weisen die in Tabelle 1 zusammengestellten Eigenschaften auf.

### Beispiel 4

330 Gew.-Teile der Polyacrylatdispersion II werden mit 3 Gew.-Teilen des Polyetherpolyols II vermischt. Nach der Zugabe der lacktechnischen Hilfsmittel gemäß Beispiel 1 werden 20 Gew.-Teile des Polyisocyanats II eingerührt (NCO/OH-Äquivalentverhältnis = 1,2:1). Die entsprechend Beispiel 1 hergestellten Lackfilme weisen die in Tabelle 1 zusammengestellten Eigenschaften auf.

### Beispiel 5

330 Gew.-Teile der Polyacrylatdispersion III werden mit 2 Gew.-Teilen des Polyetherpolyols III vermischt. Nach Zugabe der lacktechnischen Hilfsmittel gemäß Beispiel 1 werden 20 Gew.-Teile des Polyisocyanats I eingerührt. Die gemäß Beispiel 1 hergestellten Lackfilme weisen die in Tabelle 1 zusammengestellten Eigenschaften auf.

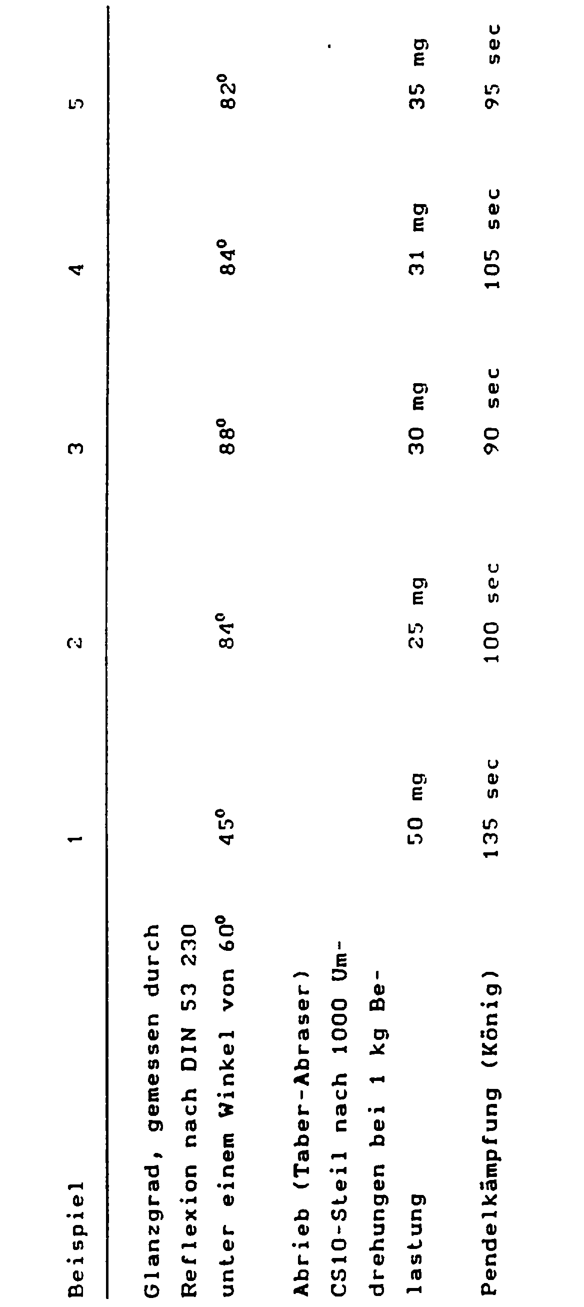

## Patentansprüche

1. Verwendung von wasserlöslichen Polyetherpolyolen des Molekulargewichtsbereichs Mn 300 bis 1000 in Mengen von 0,5 bis 6 Gew.-%, bezogen auf das Gewicht der Komponente a), als Zusatzmittel für wäßrige Beschichtungsmittel, deren Bindemittel aus einer Kombination aus
a) einer in Wasser gelöst oder dispergiert vorliegenden Polyolkomponente, bestehend zumindest zu 51 Gew.% aus mindestens einem wasserverdünnbaren, Hydroxylgruppen aufweisenden Polyacrylatharz eines über 500 liegenden Molekulargewichts Mn und
b) einer in der wäßrigen Lösung und/oder Dispersion der Polyolkomponente a) emulgiert vorliegenden Polyisocyanatkomponente einer Viskosität bei 23°C von 50 bis 10 000 mPa.s
besteht, wobei die Mengenverhältnisse der Bindemittelkomponenten und der als Zusatzmittel eingesetzten Polyetherpolyole einem NCO/OH-Äquivalentverhältnis von 0,5:1 bis 5:1 entsprechen.

2. Verwendung gemäß Anspruch 1, dadurch gekennzeichnet, daß die als Zusatzmittel eingesetzten Polyetherpolyole ein Molekulargewicht Mn von 350 bis 800 aufweisen und in einer Menge von 1 bis 4,5 Gew.-%, bezogen auf das Gewicht der Komponente a), zum Einsatz gelangen.

3. Verwendung gemäß Anspruch 1 und 2, dadurch gekennzeichnet, daß die Komponente a) im wesentlichen aus mindestens einem wasserverdünnbaren Polymerisationsharz des Molekulargewichtsbereichs Mn 500 bis 50 000, mit einer Hydroxylzahl von 16,5 bis 264 mg KOH/g Festharz, einer Säurezahl von 0 bis 150 mg KOH/g Festharz und einem Gehalt an Sulfonat- und/oder Carboxylatgruppen von 5 bis 417 Milliäquivalenten pro 100 g Feststoff besteht.

4. Verwendung gemäß Anspruch 1 bis 3, dadurch gekennzeichnet, daß die Komponente b) im wesentlichen aus mindestens einem organischen Polyisocyanat mit ausschließlich (cyclo)aliphatisch gebundenen Isocyanatgruppen besteht.

## Claims

1. Use of water-soluble polyether polyols of the molecular weight range Mₙ 300 to 1000 in quantities of 0.5 to 6 wt.%, relative to the weight of component a), as additives to aqueous coating compositions, the binder of which consists of a combination of
a) a polyol component dissolved or dispersed in water, at least 51 wt.% of which consists of a water-borne polyacrylate resin having hydroxyl groups and a molecular weight Mₙ of above 500 and
b) a polyisocyanate component of a viscosity at 23°C of 50 to 10000 mPa·s emulsified in the aqueous solution and/or dispersion of the polyol component a),
wherein the quantity ratios of the binder components and of the polyether polyols used as the additives correspond to an NCO/OH equivalent ratio of 0.5:1 to 5:1.

2. Use according to claim 1, characterised in that the polyether polyols used as the additives have a molecular weight Mₙ of 350 to 800 and are used in a quantity of 1 to 4.5 wt.%, relative to the weight of component a).

3. Use according to claims 1 and 2, characterised in that component a) substantially consists of at least one water-borne polymer resin of a molecular weight range Mₙ of 500 to 50000, with a hydroxyl value of 16.5 to 264 mg KOH/g of solid resin, an acid value of 0 to 150 mg KOH/g of solid resin and a content of sulphonate and/or carboxylate groups of 5 to 417 milliequivalents per 100 g of solids.

4. Use according to claims 1 to 3, characterised in that component b) substantially consists of at least one organic polyisocyanate with exclusively (cyclo)aliphatically attached isocyanate groups.

## Revendications

1. Utilisation de polyétherpolyols solubles dans l'eau, de poids moléculaire Mn 300 à 1000 en quantité de 0,5 à 6 % en poids, par rapport du composant a), en tant qu'additifs à des produits de revêtement aqueux dont le liant consiste en combinaison de
a) un composant polyol en solution ou en dispersion dans l'eau, consistant pour au moins 51% en poids en au moins une résine de polyacrylate diluable à l'eau, contenant des groupes hydroxy, de poids moléculaire Mn supérieur à 500 et
b) un composant polyisocyanate de viscosité 50 à 10 000 mPa.s à 23°C, en
émulsion dans la solution et/ou dispersion aqueuse du composant polyol a), les proportions relatives entre les composants du liant et les polyétherpolyols utilisés en tant qu'additifs correspondant à un rapport de 0,5 : 1 à 5 : 1 entre les équivalents de groupes NCO et les équivalents de groupes OH.

2. Utilisation selon la revendication 1, caractérisée en ce que les polyétherpolyols utilisés en tant qu'additifs ont un poids moléculaire Mn de 350 à 800 et Sont mis en oeuvre en quantité de 1 à 4,5 % du poids du composant a).

3. Utilisation selon les revendications 1 et 2, caractérisée en ce que le composant a) consiste essentiellement en au moins une résine de polymérisation, diluable à l'eau, de poids moléculaire Mn 500 à 50 000, avec un indice d'hydroxyle de 16,5 à 264 mg de KOH/g de résine solide, un indice d'acide de 0 à 150 g de KOH/g de résine solide et une teneur en groupes sulfonates et/ou carboxylates de 5 à 417 milli-équivalents pour 100 g de matière solide.

4. Utilisation selon les revendications 1 à 3, caractérisée en ce que le composant b) consiste essentiellement en au moins un polyisocyanate organique à groupes isocyanates à liaisons exclusivement (cyclo)aliphatiques.
